(19) Europäisches Patentamt / European Patent Office / Office européen des brevets

(11) **EP 2 706 650 B1**

(12) **EUROPEAN PATENT SPECIFICATION**

(45) Date of publication and mention
of the grant of the patent:
**06.04.2022 Bulletin 2022/14**

(21) Application number: **13180981.6**

(22) Date of filing: **20.08.2013**

(51) International Patent Classification (IPC):
**H02M 3/158** (2006.01) **H02M 7/493** (2007.01)

(52) Cooperative Patent Classification (CPC):
**H02M 3/1584; H02M 7/493**

(54) **POWER CONVERSION SYSTEM**

LEISTUNGSWANDLUNGSSYSTEM

SYSTÈME DE CONVERSION D'ALIMENTATION

(84) Designated Contracting States:
**DE GB**

(30) Priority: **10.09.2012 JP 2012198040**

(43) Date of publication of application:
**12.03.2014 Bulletin 2014/11**

(73) Proprietors:
• **Hitachi, Ltd.**
**Tokyo 100-8280 (JP)**
• **Hitachi Mito Engineering Co., Ltd.**
**Hitachinaka-shi**
**Ibaraki 312-8506 (JP)**

(72) Inventors:
• **Kojima, Tetsuo**
**Chiyoda-ku, Tokyo 100-8280 (JP)**
• **Shinomiya, Takeshi**
**Chiyoda-ku, Tokyo 100-8280 (JP)**
• **Sugiura, Tetsu**
**Hitachinaka-shi, Ibaraki 312-8506 (JP)**

(74) Representative: **Mewburn Ellis LLP**
**Aurora Building**
**Counterslip**
**Bristol BS1 6BX (GB)**

(56) References cited:
WO-A1-2008/149393     WO-A1-2013/024496
WO-A2-2013/101432     US-A1- 2003 218 888

• DE D ET AL: "Decentralized Parallel Operation of Inverters Sharing Unbalanced and Nonlinear Loads", IEEE TRANSACTIONS ON POWER ELECTRONICS, INSTITUTE OF ELECTRICAL AND ELECTRONICS ENGINEERS, USA, vol. 25, no. 12, 1 December 2010 (2010-12-01), pages 3015-3025, XP011343833, ISSN: 0885-8993, DOI: 10.1109/TPEL.2010.2068313
• DIPANKAR DE ET AL: "A Proportional {\bm +} Multiresonant Controller for Three-Phase Four-Wire High-Frequency Link Inverter", IEEE TRANSACTIONS ON POWER ELECTRONICS, INSTITUTE OF ELECTRICAL AND ELECTRONICS ENGINEERS, USA, vol. 24, no. 4, 1 April 2010 (2010-04-01), pages 899-906, XP011297333, ISSN: 0885-8993

**Description**

BACKGROUND OF THE INVENTION

1. Field of the Invention

The present invention relates to a power conversion system for supplying AC (Alternating-Current) power, and in particular, to parallel control technology used when a plurality of power conversion devices are connected in parallel.

2. Description of the Related Art

A system comprising a power conversion device (so-called AC power supply) for supplying AC power is in many cases configured to operate a plurality of power conversion devices in parallel. This configuration is employed for purposely dispersing power conversion devices in the system when it is difficult to supply sufficient electric power to a high-capacity load from a single power conversion device or when it is necessary to increase the reliability of the system. In such cases where a plurality of power conversion devices are operated in parallel, the load sharing among the power conversion devices is desired to be as even as possible from the viewpoint of electric power efficiency.

Technology for balancing the load sharing among power conversion devices when a plurality of power conversion devices are operated in parallel has been known as described in JP-2006-121839-A, for example. In the technology of JP-2006-121839-A, communication means are used among the power conversion devices in order to balance the electric current load sharing among the power conversion devices.

Techniques for implementing the parallel operation of a plurality of power conversion devices without using the information communication means have also been known as described in JP-5-260793-A, JP-6-153519-A, JP-2007-244080-A, and JP-2009-254122-A. The techniques of these patent literatures balance the electric current load sharing among the power conversion devices by using zero-phase current, that is, the sum total of phase currents acquired in the power conversion devices.

DE D ET AL: "Decentralized Parallel Operation of Inverters Sharing Unbalanced and Nonlinear Loads", IEEE TRANSACTIONS ON POWER ELECTRONICS, INSTITUTE OF ELECTRICAL AND ELECTRONICS ENGINEERS, USA, vol. 25, no. 12, 1 December 2010 (2010-12-01), pages 3015-3025, describes a wireless control strategy for parallel operation of three-phase four-wire inverters. A generalized situation is considered where the inverters are of unequal power ratings and the loads are nonlinear and unbalanced in nature. The control algorithm exploits the potential of sinusoidal domain proportional + multiresonant controller (in the inner voltage regulation loop) to make the system suitable for nonlinear and unbalanced loads with a simple and generalized structure of virtual output-impedance loop. The decentralized operation is achieved by using three-phase P/Q droop characteristics.

SUMMARY OF THE INVENTION

In a vehicle or a set of vehicles (cars) in which a plurality of power conversion devices are operated in parallel, there are cases where the power conversion devices are supplied with electric power from separate DC voltage supplies. This configuration contributes to improvement of reliability in the sense that the system does not stop even in case of failure of one DC voltage supply thanks to the electric power supply load sharing among the DC voltage supplies or the redundant configuration of the system.

However, in this case where independent and separate DC voltage supplies are used, a DC component of the zero-phase current occurs in each DC voltage supply and the electric current load balancing becomes uneven (unbalanced). This unbalanced state causes an increase in the electric power loss and difficulty in maintaining high accuracy and high responsiveness of the output voltage control.

In JP-2006-121839-A employing communication means in order to balance the load sharing among a plurality of power conversion devices, each device is necessitated to increase in size and the cost also increases. Further, the implementation of such a system is difficult when there is an intrinsic difficulty in securing appropriate communication means among power conversion devices distant from one another or when high reliability of the communication means is also required.

In the techniques of JP-5-260793-A, JP-6-153519-A, JP-2007-244080-A, two power conversion devices share the same DC power supply (DC voltage supply), and thus the DC components of the zero-phase potentials of the two power conversion devices coincide with each other and substantially no DC component flows in the zero-phase current. However, these techniques involve problems such as deterioration in the system reliability against trouble (e.g., failure of the DC voltage supply) and a heavy load on the DC voltage supply.

In the technique of JP-2009-254122-A, two power conversion devices are provided with separate AC voltage supplies. Each power conversion device is equipped with a power converter for converting the supplied AC voltage into a fixed DC voltage. Therefore, this technique leads to increase in the size of each device and the cost.

It is therefore a primary object of the present invention to provide a power conversion system capable of maintaining the electric power efficiency at high levels and facilitating high-accuracy output voltage control without the need of enlarging the devices in cases where separate power conversion devices are operated in parallel.

To address the above object, a power conversion system in accordance with the present invention is set out in claim 1.

According to the present invention, it is possible to provide a power conversion system that suppresses the electric power loss and achieves high-accuracy output voltage control without the need of enlarging the devices in the parallel operation of separate power conversion devices used in combination.

BRIEF DESCRIPTION OF THE DRAWINGS

Fig. 1 is a schematic diagram showing circuitry in accordance with the present invention.
Fig. 2 is a schematic diagram showing the details of a controller shown in Fig. 1.
Fig. 3 is a schematic diagram showing the details of a DC voltage supply shown in Fig. 1.
Fig. 4 is a schematic diagram showing the details of zero-phase current detecting means shown in Fig. 2.
Figs. 5A - 5D are graphs showing operating waveforms of the zero-phase current detecting means shown in Fig. 4.
Figs. 6A - 6D are graphs showing operating waveforms in a case where the frequency of a disturbance signal is higher than an LC resonance frequency.
Figs. 7A - 7D are graphs showing the operating waveforms in a case where the frequency of the disturbance signal is lower than the LC resonance frequency.
Fig. 8 is a schematic diagram for explaining the principle of the flow of the zero-phase current

DESCRIPTION OF THE PREFERRED EMBODIMENTS

In this embodiment, the electric current load balancing is facilitated by preventing the flow of the DC component of the zero-phase current of the power conversion devices. Consequently, the suppression of energy loss and the increase in the accuracy of the output voltage control are realized.

First of all, the principle of the flow of the zero-phase current will be explained below referring to a drawing.

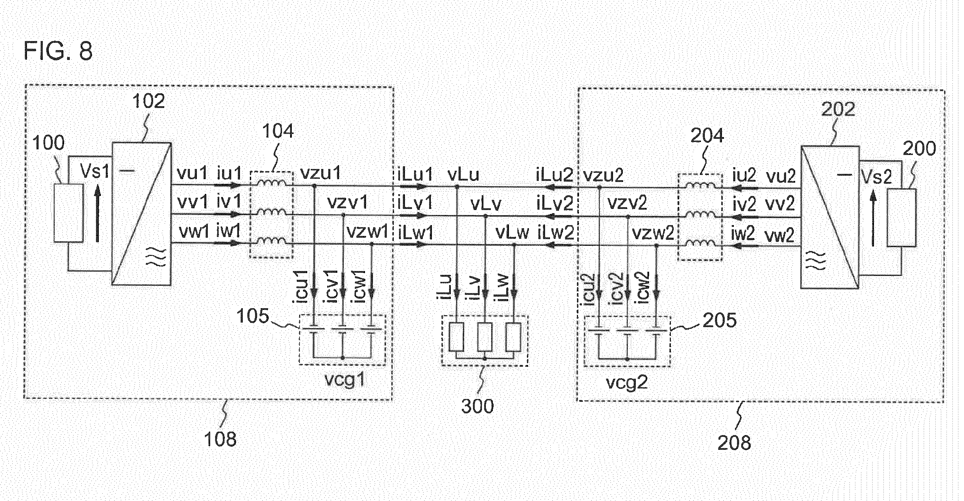

Referring to Fig. 8, a first power conversion device 108 and a second power conversion device 208 are connected in parallel. Output terminals of the first and second power conversion devices 108 and 208 are connected to an AC (Alternating-Current) load 300. The AC load 300 can be an electricity receiving part which receives electric power from the first power conversion device and/or the second power conversion device, or a control target device which is controlled by receiving the electric power from the first power conversion device and/or the second power conversion device.

The first power conversion device 108 includes a DC voltage supply 100, a DC input voltage sensor 101, a power converter 102 (inverter), an AC reactor 104, and an AC capacitor 105. The DC input voltage sensor 101 detects the output voltage of the DC voltage supply 100. The power converter 102 (inverter) converts the DC power supplied by the DC voltage supply 100 into AC power. The AC reactor 104 is connected to the AC output side of the power converter 102 in order to smooth the output currents. The AC capacitor 105 is connected to the output side of the AC reactor 104 in order to stabilize the output voltages.

In the first power conversion device 108, the output voltage of the DC voltage supply 100 will be represented as DC power supply voltage Vs1. The output voltages (phase voltages) of the power converter 102 will be represented as vu1, vv1 and vw1. The output currents of the power converter 102 will be represented as iu1, iv1 and iw1. The currents flowing into the AC capacitor 105 will be represented as icu1, icv1 and icw1. The neutral point electric potential of the AC capacitor 105 will be represented as vcg1. The output voltages (phase voltages) of the AC capacitor 105 (i.e., the output voltages (phase voltages) of the first power conversion device 108) will be represented as vzu1, vzv1 and vzw1. The output currents of the first power conversion device 108 will be represented as iLu1, iLv1 and iLw1.

The second power conversion device 208 includes a DC voltage supply 200, a DC input voltage sensor 201, a power converter 202 (inverter), an AC reactor 204, and an AC capacitor 205. The DC input voltage sensor 201 detects the output voltage of the DC voltage supply 200. The power converter 202 (inverter) converts the DC power supplied by the DC voltage supply 200 into AC power. The AC reactor 204 is connected to the AC output side of the power converter 202 in order to smooth the output currents. The AC capacitor 205 is connected to the output side of the AC reactor 204 in order to stabilize the output voltages.

In the second power conversion device 208, the output voltage of the DC voltage supply 200 will be represented as DC power supply voltage Vs2. The output voltages (phase voltages) of the power converter 202 will be represented as vu2, vv2 and vw2. The output currents of the power converter 202 will be represented as iu2, iv2 and iw2. The currents flowing into the AC capacitor 205 will be represented as icu2, icv2 and icw2. The neutral point electric potential of the AC capacitor 205 will be represented as vcg2. The output voltages (phase voltages) of the AC capacitor 205 (i.e., the output voltages (phase voltages) of the second power conversion device 208) will be represented as vzu2, vzv2 and vzw2. The output currents of the second power conversion device 208 will be represented as iLu2, iLv2 and iLw2.

The currents flowing into the AC load 300 will be represented as iLu, iLv and iLw. The input voltages (phase voltages) to the AC load 300 will be represented as vLu, vLv and vLw.

In the first power conversion device 108, the output currents iu1, iv1 and iw1 of the power converter 102 are represented by the following expressions:

$$
\begin{aligned}
iu1 &= (vu1 - vzu1)/(R + s \cdot L) \\
iv1 &= (vv1 - vzv1)/(R + s \cdot L) \\
iw1 &= (vw1 - vzw1)/(R + s \cdot L) \quad \cdots (1)
\end{aligned}
$$

where "R" and "L" represent the impedance and the inductance of the AC reactor 104 and "s" represents the Laplace operator.

Assuming that the capacitance of the AC capacitor 105 equals C and the currents flowing into the AC capacitor 105 equal icu1, icv1 and icw1, the output voltages (phase voltages) vzu1, vzv1 and vzw1 are represented by the following expressions:

$$
\begin{aligned}
vzu1 &= icu1/(s \cdot C) + vcg1 \\
vzv1 &= icv1/(s \cdot C) + vcg1 \\
vzw1 &= icw1/(s \cdot C) + vcg1 \quad \cdots (2)
\end{aligned}
$$

The output currents iu1, iv1 and iw1 of the power converter 102 separate into the currents icu1, icv1 and icw1 flowing into the AC capacitor 105 and the currents iLu1, iLv1 and iLw1 supplied to the load as follows:

$$
\begin{aligned}
iu1 &= icu1 + iLu1 \\
iv1 &= icv1 + iLv1 \\
iw1 &= icw1 + iLw1 \quad \cdots (3)
\end{aligned}
$$

The output currents (load supply currents) iLu1, iLv1 and iLw1 of the power conversion device 108 are represented by the following expressions:

$$
\begin{aligned}
iLu1 &= (vzu1 - vLu)/r \\
iLv1 &= (vzv1 - vLv)/r \\
iLw1 &= (vzw1 - vLw)/r \quad \cdots (4)
\end{aligned}
$$

where "r" represents the wiring impedance from the power conversion device 108 to the AC load 300.

The average (ig1) of the output currents iu1, iv1 and iw1 of the power converter 102, the average (vg1) of the output voltages (phase voltages) vu1, vv1 and vw1 of the power converter 102, the average (vzg1) of the output voltages (phase voltages) vzu1, vzv1 and vzw1 of the AC capacitor 105, and the average (iLg1) of the output currents (load supply currents) iLu1, iLv1 and iLw1 of the power conversion device 108 are defined as follows:

$$
\begin{aligned}
ig1 &= (iu1 + iv1 + iw1)/3 \\
vg1 &= (vu1 + vv1 + vw1)/3 \\
vzg1 &= (vzu1 + vzv1 + vzw1)/3 \\
iLg1 &= (iLu1 + iLv1 + iLw1)/3 \quad \cdots (5)
\end{aligned}
$$

The average of the input voltages (phase voltages) vLu, vLv and vLw to the AC load 300 will be represented as "vLg". The average of the above expressions (1) is determined as follows:

$$ig1 = (vg1 - vzg1)/(R + s{\cdot}L) \;\cdots\; (1')$$

The average of the above expressions (3) is determined. Since the sum total of the currents icu1, icv1 and icw1 flowing into the AC capacitor 105 equals 0 (icu1 + icv1 + icw1 = 0) according to the Kirchhoff's law, the following expression holds:

$$ig1 = iLg1 \;\cdots\; (3')$$

The average of the above expressions (4) is determined as follows:

$$iLg1 = (vzg1 - vLg)/r \;\cdots\; (4')$$

By eliminating iLg1 and vzg1 from the expressions (1'), (3') and (4'), the following expression is obtained:

$$ig1 = (vg1 - vLg)/(R + r + s{\cdot}L) \;\cdots\; (6)$$

Also in the power conversion device 208, the following expression is obtained by a similar process:

$$ig2 = (vg2 - vLg)/(R + r + s{\cdot}L) \;\cdots\; (7)$$

The currents iLu, iLv and iLw flowing into the AC load 300 are represented by the following expressions:

$$iLu1 + iLu2 = iLu$$

$$iLv1 + iLv2 = iLv$$

$$iLw1 + iLw2 = iLw \;\cdots\; (8)$$

The average of the above expressions (8) is determined. Since the sum total of the currents iLu, iLv and iLw flowing into the AC load 300 equals 0 (iLu + iLv + iLw = 0) according to the Kirchhoff's law, the following expression holds:

$$ig1 + ig2 = 0 \;\cdots\; (9)$$

By eliminating vLg from the expressions (6) and (7), the following expression is obtained:

$$ig1 = -ig2 = (vg1 - vg2)/2(R + r + s{\cdot}L)$$
$$\cdots\; (10)$$

The zero-phase current (iz1) seen from the power conversion device 108 (sum total of the output currents iu1, iv1 and iw1 of the power converter 102) equals three times the average ig1. By using the relationship of the expression (10), the following expressions hold:

$$iz1 = 3{\cdot}ig1 = 3{\cdot}(vg1 - vg2)/2(R + r + s{\cdot}L)$$
$$iz2 = -iz1 \;\cdots\; (11)$$

The zero-phase current (iz2) seen from the power conversion device 208 is equal in magnitude and opposite in polarity to the zero-phase current iz1 seen from the power conversion device 108 (iz2 = -iz1).

As is clear from the above result, the zero-phase currents iz1 and iz2 flow according to the difference between the average vg1 of the output voltages (phase voltages) of the power converter 102 and the average vg2 of the output voltages (phase voltages) of the power converter 202.

The average of the output voltages (phase voltages) of a power converter (inverter) will hereinafter be referred to as "zero-phase potential". While the zero-phase current flows according to the difference between the zero-phase potentials of two power conversion devices, let us especially discuss below a case where a DC-like voltage difference has occurred between the zero-phase potentials of two power conversion devices. Specifically, by making "s" in the expression (11) converge on 0, the following expression is obtained:

$$iz1 = 3 \cdot ig1 = 3 \cdot (vg1 - vg2)/2(R + r) \quad \cdots \quad (12)$$

Thus, in the case where a DC-like voltage difference has occurred between the zero-phase potentials of two power conversion devices, the zero-phase current also flows as DC current. In general, the wiring impedance r and the impedance R of the AC reactor are set at extremely low values since they cause resistance loss and deterioration in the electric power efficiency of the system. Therefore, extremely high zero-phase current flows as DC current even when the DC-like voltage difference between the zero-phase potentials of two power conversion devices is slight. This disables the balancing of the electric current loads.

Let us consider here an imaginary case where both the DC voltage supplies 100 and 200 are grounded on their negative-terminal sides. The electric potentials of the positive terminals of the DC voltage supplies 100 and 200 in this case are assumed to be Vs1 and Vs2, respectively. In this case, the zero-phase potentials of the power conversion devices 108 and 208 equal Vs1/2 and Vs2/2, respectively. When DC voltages of two power conversion devices differ from each other (Vs1 ≠ Vs2), a DC-like voltage difference occurs between the zero-phase potentials of the two power conversion devices, and consequently, extremely high zero-phase current flows as DC current.

Referring now to the drawings, a description will be given in detail of a preferred embodiment in accordance with the present invention.

<First Embodiment>

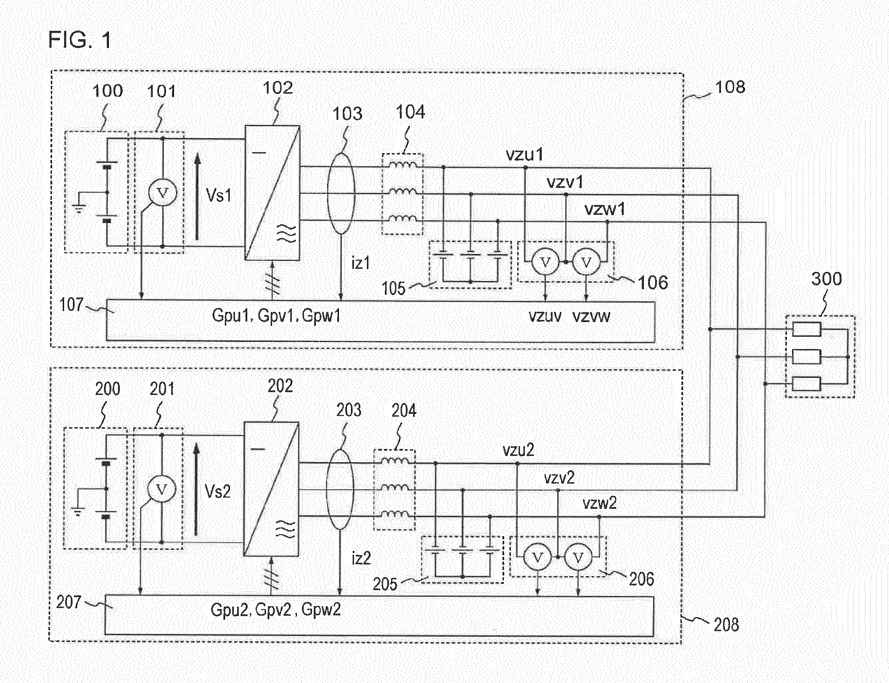

Fig. 1 is a schematic diagram showing the circuitry of a power conversion system (capable of suppressing the DC component of the zero-phase current) in accordance with this embodiment.

A first power conversion device 108 and a second power conversion device 208 constituting the power conversion system of this embodiment are connected in parallel. Output terminals of the first and second power conversion devices 108 and 208 are connected to an AC (Alternating-Current) load 300. The first power conversion device 108 includes a DC voltage supply 100, a DC input voltage sensor 101, a power converter 102 (inverter), an output current sensor 103, an AC reactor 104, an AC capacitor 105, an AC output voltage sensor 106, and a controller 107. The intermediate point of the DC voltage supply 100 is grounded. The DC input voltage sensor 101 detects the output voltage of the DC voltage supply 100. The power converter 102 (inverter) converts the DC power supplied by the DC voltage supply 100 into AC power. The output current sensor 103 detects zero-phase components of the output currents of the power converter 102. The AC reactor 104 is connected to the AC output side of the power converter 102 in order to smooth the output currents. The AC capacitor 105 is connected to the output side of the AC reactor 104 in order to stabilize the output voltages. The AC output voltage sensor 106 serves as voltage detecting means for detecting line-to-line voltages of the AC capacitor 105. The controller 107 receives output signals of the DC input voltage sensor 101, the output current sensor 103 and the AC output voltage sensor 106 and outputs gate pulse signals for driving the power converter 102.

Similarly, the second power conversion device 208 includes a DC voltage supply 200, a DC input voltage sensor 201, a power converter 202 (inverter), an output current sensor 203, an AC reactor 204, an AC capacitor 205, an AC output voltage sensor 206, and a controller 207. The intermediate point of the DC voltage supply 200 is grounded. The DC input voltage sensor 201 detects the output voltage of the DC voltage supply 200. The power converter 202 (inverter) converts the DC power supplied by the DC voltage supply 200 into AC power. The output current sensor 203 detects the zero-phase components of the output currents of the power converter 202. The AC reactor 204 is connected to the AC output side of the power converter 202 in order to smooth the output currents. The AC capacitor 205 is connected to the output side of the AC reactor 204 in order to stabilize the output voltages. The AC output voltage sensor 206 detects the line-to-line voltages of the AC capacitor 205. The controller 207 receives output signals of the DC input voltage sensor 201, the output current sensor 203 and the AC output voltage sensor 206 and outputs gate pulse signals for driving the power converter 202.

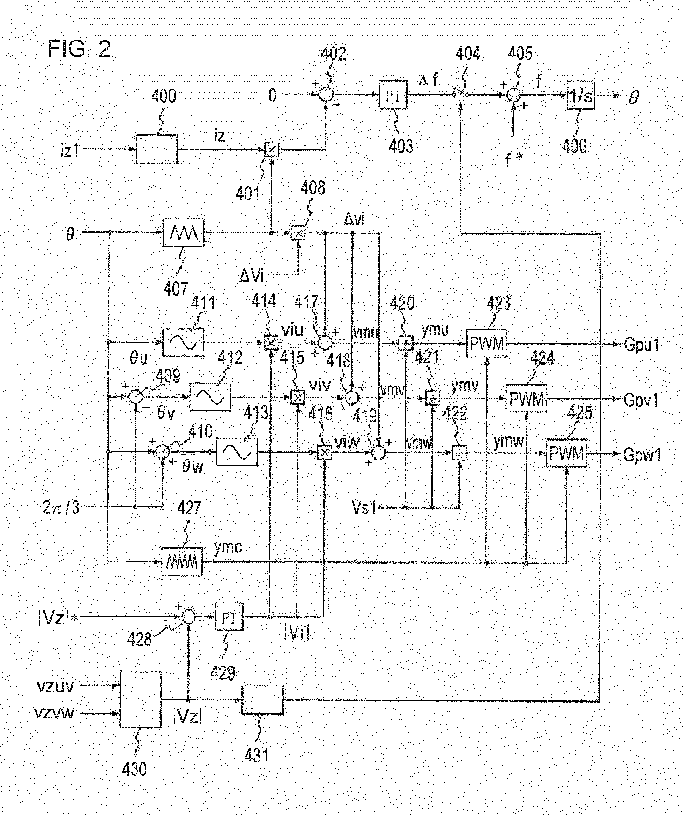

Fig. 2 is a schematic diagram showing the details of the controller 107 shown in Fig. 1.

The controller 107 includes zero-phase current detecting means 400, proportional-integral control means 403, proportional control integration means 429, effective value calculation means 430, other-group startup judgment means 431, a switch 404, adders 405, 410, 417, 418 and 419, subtracters 402, 409 and 428, multipliers 401, 408, 414, 415 and 416, dividers 420, 421 and 422, an integrator 406, a first PWM calculator 423, a second PWM calculator 424, and a third PWM calculator 425. The controller 107 has tables such as a disturbance signal table 407, a first sinusoidal wave table 411, a second sinusoidal wave table 412, a third sinusoidal wave table 413 and a carrier wave table 427.

The zero-phase current detecting means 400 extracts zero-phase current iz of a disturbance signal component from the zero-phase current iz1 detected by the output current sensor 103 shown in Fig. 1. The effective value calculation means 430 calculates an output voltage effective value |Vz| from the output voltages (line-to-line voltages) vzuv and vzvw detected by the AC output voltage sensor 106 shown in Fig. 1. The other-group startup judgment means 431 refers to the output voltage effective value |Vz| outputted by the effective value calculation means 430, and judges that the power conversion device of the other group has already been started up if the output voltage effective value |Vz| at the time of startup of the power conversion device of its own group is a prescribed value or higher. The disturbance signal table 407 serves as disturbance signal generating means for generating a disturbance signal according to a fundamental wave phase θ.

The multiplier 401 calculates the product of the zero-phase current iz and the output of the disturbance signal table 407. The subtracter 402 calculates the difference between 0 and the output of the multiplier 401. The proportional-integral control means 403 executes the proportional-integral control (PI control) according to the output of the subtracter 402 and thereby outputs a fundamental wave frequency operating value Δf. The switch 404 receives the fundamental wave frequency operating value Δf from the proportional-integral control means 403 as an input signal, refers to the output of the other-group startup judgment means 431, and connects the circuit when the power conversion device of the other group has already been started up.

The adder 405 determines a fundamental wave frequency f based on the sum of a fundamental wave frequency reference value f* and the output of the switch 404. The integrator 406 determines the fundamental wave phase θ by integrating the fundamental wave frequency f outputted by the adder 405. The subtracter 428 calculates the difference between an output voltage effective value command |Vz|* and the output voltage effective value |Vz| outputted by the effective value calculation means 430.

The proportional control integration means 429 executes the proportional-integral control (PI control) according to the output of the subtracter 428 and thereby determines an output voltage effective value command |Vi|.

The subtracter 409 determines a phase θv that is 120 degrees behind the fundamental wave phase θ. The adder 410 determines a phase θw that is 120 degrees ahead of the fundamental wave phase θ.

The first sinusoidal wave table 411 outputs a sinusoidal wave according to the fundamental wave phase θ = θu. The second sinusoidal wave table 412 outputs a sinusoidal wave according to the phase θv outputted by the subtracter 409. The third sinusoidal wave table 413 outputs a sinusoidal wave according to the phase θw outputted by the adder 410.

The multiplier 414 determines an output voltage command (fundamental wave) viu based on the product of the sinusoidal wave outputted by the first sinusoidal wave table 411 and the output voltage effective value command |Vi| outputted by the proportional control integration means 429. The multiplier 415 determines an output voltage command (fundamental wave) viv based on the product of the sinusoidal wave outputted by the second sinusoidal wave table 412 and the output voltage effective value command |Vi| outputted by the proportional control integration means 429. The multiplier 416 determines an output voltage command (fundamental wave) viw based on the product of the sinusoidal wave outputted by the third sinusoidal wave table 413 and the output voltage effective value command |Vi| outputted by the proportional control integration means 429.

The multiplier 408 determines a disturbance signal Δvi based on the product of a disturbance amplitude ΔVi and the output of the disturbance signal table 407.

The adder 417 determines an output voltage command vmu based on the sum of the output voltage command (fundamental wave) viu outputted by the multiplier 414 and the disturbance signal Δvi outputted by the multiplier 408. The adder 418 determines an output voltage command vmv based on the sum of the output voltage command (fundamental wave) viv outputted by the multiplier 415 and the disturbance signal Δvi outputted by the multiplier 408.

The adder 419 determines an output voltage command vmw based on the sum of the output voltage command (fundamental wave) viw outputted by the multiplier 416 and the disturbance signal Δvi outputted by the multiplier 408.

The divider 420 generates a modulated wave ymu by dividing the output voltage command vmu outputted by the adder 417 by the DC power supply voltage Vs1 detected by the DC input voltage sensor 101 shown in Fig. 1. The divider 421 generates a modulated wave ymv by dividing the output voltage command vmv outputted by the adder 418 by the DC power supply voltage Vs1. The divider 422 generates a modulated wave ymw by dividing the output voltage command vmw outputted by the adder 419 by the DC power supply voltage Vs1.

The carrier wave table 427 generates a carrier wave ymc according to the fundamental wave phase θ.

The first PWM calculator 423 compares the modulated wave ymu outputted by the divider 420 with the carrier wave ymc outputted by the carrier wave table 427 and thereby outputs a gate pulse signal Gpu1 for driving the power converter 102 shown in Fig. 1. The second PWM calculator 424 compares the modulated wave ymv outputted by the divider 421 with the carrier wave ymc outputted by the carrier wave table 427 and thereby outputs a gate pulse signal Gpv1 for driving the power converter 102 shown in Fig. 1. The third PWM calculator 425 compares the modulated wave ymw outputted by the divider 422 with the carrier wave ymc outputted by the carrier wave table 427 and thereby outputs a gate pulse signal Gpw1 for driving the power converter 102 shown in Fig. 1.

The controller 207 may also be configured in the same way as shown in Fig. 2.

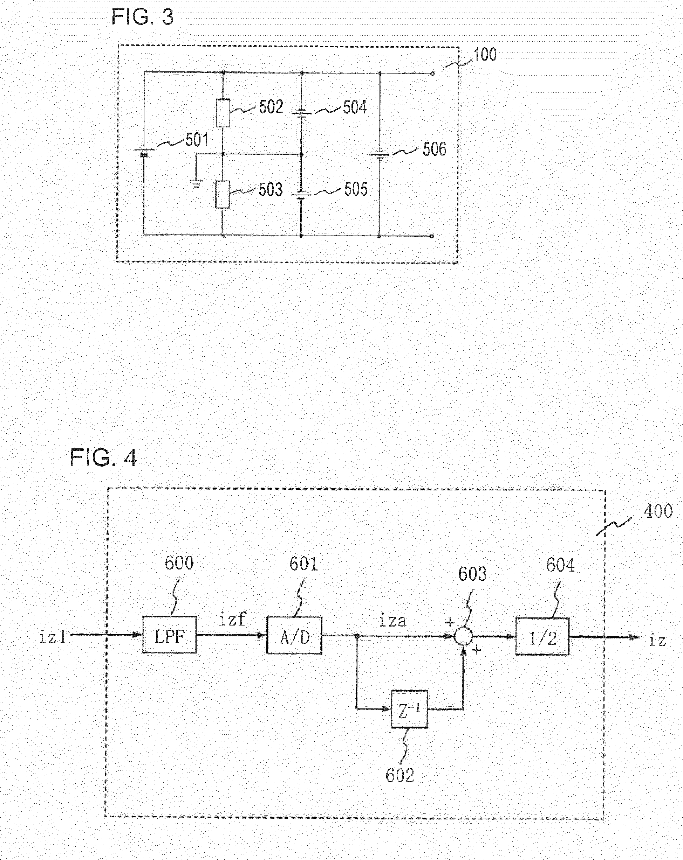

Fig. 3 is a schematic diagram showing the details of the DC voltage supply 100 shown in Fig. 1.

The DC voltage supply 100 includes a DC power supply 501, balancing resistors 502 and 503, voltage-dividing capacitors 504 and 505, and a filter capacitor 506. The balancing resistors 502 and 503 are connected in series. The intermediate point between the balancing resistors 502 and 503 is grounded. The series connection of the balancing resistors 502 and 503 is connected in parallel with the DC power supply 501. Similarly, the voltage-dividing capacitors 504 and 505 are connected in series, the intermediate point between the capacitors 504 and 505 is grounded, and the series connection of the capacitors 504 and 505 is connected in parallel with the DC power supply 501. The filter capacitor 506 is also connected in parallel with the DC power supply 501. In principle, the capacitances of the voltage-dividing capacitors 504 and 505 are desired to be set equal to each other. However, in consideration of effects of noise, etc., it is not absolutely necessary to set the capacitances exactly equal to each other.

Fig. 4 is a schematic diagram showing the details of the zero-phase current detecting means 400 shown in Fig. 2.

The zero-phase current detecting means 400 includes a lowpass filter 600, an A/D converter 601, a memory element 602, an adder 603, and a gain 604. The zero-phase current iz1 detected by the output current sensor 103 is inputted to the lowpass filter 600 whose cutoff frequency is set at a switching frequency. The output of the lowpass filter 600 (zero-phase current izf) is inputted to the A/D converter 601 which serves as sampling means for performing the sampling at a sampling frequency equal to a multiple of the switching frequency. The memory element 602 stores the previous value of the output (zero-phase current iza) of the A/D converter 601. The adder 603 calculates the sum of the zero-phase current iza and the output of the memory element 602. The gain 604 multiplies the output of the adder 603 by 1/2. The A/D converter 601 may perform the sampling at twice the switching frequency, for example.

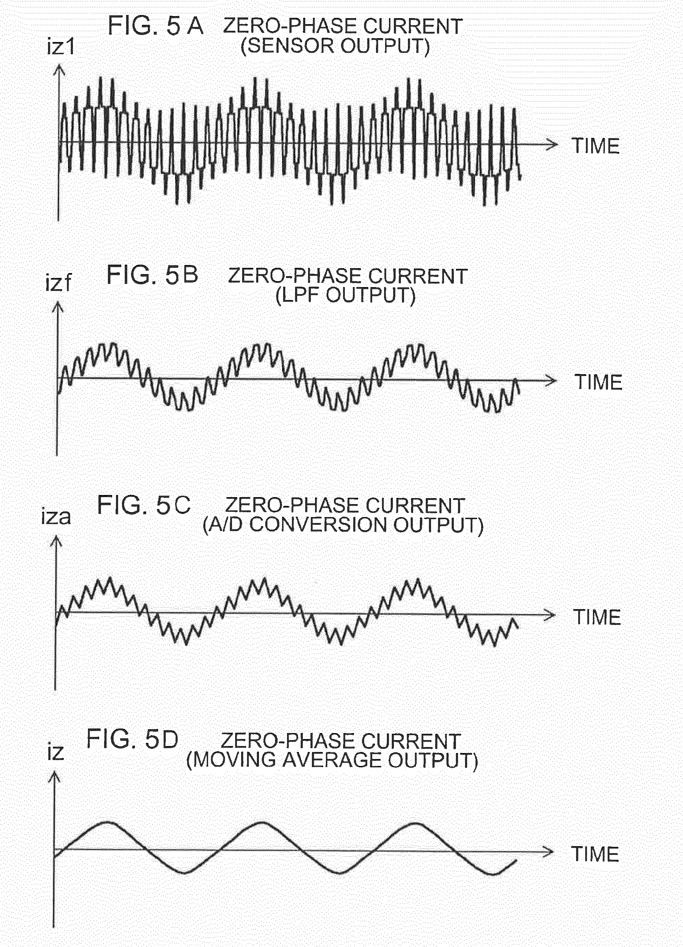

Figs. 5A - 5D are graphs showing operating waveforms of the zero-phase current detecting means 400.

Figs. 5A - 5D illustrate one fundamental wave cycle of zero-phase current waveforms seen from the first power conversion device 108 (currents in the output direction are represented as positive values) when the fundamental wave phase and the carrier wave phase of the first power conversion device 108 are ahead of those of the second power conversion device 208. A triangular wave at a frequency three times the fundamental wave frequency is applied as the disturbance signal, resulting in the flow of the zero-phase current in a waveform made by superimposing harmonics around the carrier frequency on the triangular wave (disturbance signal).

The zero-phase current iz1 shown in Fig. 5A is the value detected by the output current sensor 103. The zero-phase current iz1 is considered here to be equal to the actually flowing zero-phase current.

The zero-phase current izf shown in Fig. 5B is the output of the lowpass filter 600. Since the cutoff frequency of the lowpass filter is set at the switching frequency, harmonic components in the zero-phase current around the carrier frequency have attenuated significantly. This lowpass filter does not have to perfectly remove the harmonic components around the carrier frequency. It is rather necessary to take care not to substantially change the phase of the triangular wave (disturbance signal).

The zero-phase current iza shown in Fig. 5C is the output of the A/D converter 601. When the periodical sampling is performed at twice the carrier frequency, the harmonic components around the carrier frequency repeat increasing and decreasing at each sampling. Thus, the harmonic components around the carrier frequency can be removed by using a moving average filter (smoothing filter made up of the memory element 602, the adder 603 and the gain 604).

Consequently, in the zero-phase current iz (Fig. 5D) as the output of the moving average filter, the harmonic components around the carrier frequency have been removed and the triangular wave component (disturbance signal) has been extracted successfully.

Next, the principle of the operation for suppressing the DC component of the zero-phase current will be explained below.

In this embodiment, the suppression of the DC component of the zero-phase current is achieved by use of the DC voltage supply 100 whose intermediate point is grounded.

It is assumed in Fig. 8 that the intermediate point of each DC voltage supply 100, 200 is grounded. In this case, the electric potential of the DC voltage supply 100 equals +Vs1/2 on its positive side and -Vs1/2 on its negative side, and thus the DC component of the zero-phase potential of the power conversion device 108 equals 0. Similarly, the electric potential of the DC voltage supply 200 equals +Vs2/2 on its positive side and -Vs2/2 on its negative side, and thus the DC component of the zero-phase potential of the power conversion device 208 equals 0 in principle. Thus, the DC components of the zero-phase potentials of the two power conversion devices are both 0 in principle and no difference occurs irrespective of the output voltages Vs1 and Vs2 of the DC voltage supplies of the two power conversion devices. Consequently, the DC component of the zero-phase current is also suppressed. Further, even fluctuation in the electric potential itself does not affect the DC component of the zero-phase potential since the intermediate point of each DC voltage supply is grounded.

Even when the output voltages of the DC voltage supplies of the two power conversion devices differ from each other, the DC components of the zero-phase potentials of the power conversion devices are both substantially 0 (0 in principle), and thus basically no DC component of zero-phase current flows between the two power conversion devices. Consequently, the balancing of the electric current load sharing can be achieved with ease even when resistive elements (AC reactors, wires, etc.) between the two power conversion devices are of low impedance against the DC component. Therefore, output voltage control with high accuracy and high responsiveness can be realized by simple control, while also reducing the loss by lowering the impedance of the AC reactors and the wires.

Even when the output voltage amplitudes and the output voltage phases of the two power conversion devices are equal to each other, if the output voltages of the DC voltage supplies of the power conversion devices differ from each other, the carrier-frequency component of the zero-phase current flows between the two power conversion devices due to difference in the modulation factor (i.e., difference in the switching timing). However, in the present invention in which the carrier-frequency component is removed from the detected zero-phase current and the phase synchronization is achieved by extracting the disturbance signal component as shown in Figs. 5A - 5D, the carrier-frequency component of the zero-phase current is negligible. To sum up, even if the output voltages of the DC voltage supplies of the two power conversion devices differ from each other, the difference does not affect the fundamental wave phase synchronization.

While the carrier-frequency component of the zero-phase current is neglected in this embodiment, the carrier wave ymc is calculated according to the fundamental wave phase $\theta$ as shown in Fig. 2 and the so-called synchronous PWM method is employed in this embodiment. As a result, equality in the fundamental wave phase $\theta$ also guarantees equality in the carrier wave ymc. Thus, the pulse timing is synchronized between the two power conversion devices when the output voltages of the DC voltage supplies of the two power conversion devices are comparable to each other. Consequently, even controllers of relatively low accuracy and relatively low responsiveness are enabled to implement the high-level control of synchronizing the gate pulses of the two power conversion devices.

DC bias might be superimposed on the zero-phase current iz of the extracted disturbance signal component due to errors in the output current sensor 103, the lowpass filter 600, the A/D converter 601, etc. Even in such cases, the effect of the DC bias can be eliminated since the DC bias is converted into an AC signal of the same frequency as the disturbance signal by the calculation of the product with the disturbance signal by the multiplier 401 shown in Fig. 2 and thereafter the AC signal is integrated by the proportional-integral control means 403 and the integrator 406. Even though the grounding of the intermediate point of the DC voltage supply 100 is in reality incapable of perfectly eliminating the DC component of the zero-phase potential (due to effects of noise, etc.), the effect of the DC bias can be suppressed even when the DC bias occurs. The suppression of the effect of the DC bias does not necessarily have to be performed on both the DC voltage supplies 100 and 200; the suppression may be performed on only one of the DC voltage supplies depending on the magnitude of the effect of the DC bias.

Ideally, the sum of the zero-phase current iz1 of the first power conversion device and the zero-phase current iz2 of the second power conversion device should be 0 (iz1 + iz2 = 0) and the second power conversion device has to operate to shift the phase forward when the first power conversion device is operating to shift the phase backward, for example. However, when the amplitude of the zero-phase current is low, both of the two power conversion devices might operate to shift the phase forward or to shift the phase backward due to errors in the output current sensor 103, the lowpass filter 600, the A/D converter 601, etc. In such cases, the output frequency gradually increases or decreases, disabling the function of the constant-frequency/constant-voltage AC power supply.

To eliminate this problem, the other-group startup judgment means 431 is employed in this embodiment and a power conversion device started up earlier than the other group fixes its output frequency at the initial value (rated frequency) without executing the phase synchronization control. At the time of startup of its own group, the other-group startup judgment means 431 judges whether the other group has already been started up or not by referring to the output voltage. If the output voltage is a reference value or higher, the other group is judged to have already been started up. If the output voltage is less than the reference value, the other group is judged to have not been started up yet and the output frequency is fixed. Incidentally, a rated variation range (e.g. $\pm 10\%$) regarding the output voltage is generally defined for ordinary power supplies. Also in the present invention, the rated output voltage is assumed to have been assigned an upper limit and a lower limit. It is rational to set the reference value (used for the judgment on the startup of the other group) at the lower limit of the rated output voltage. While a power conversion system employing two power conversion devices 108 and 208 (two DC voltage supplies 100 and 200) has been described in this embodiment, it is also possible to employ three or more power conversion devices. In such cases, the power conversion devices may be connected together in parallel similarly to the connection of the power conversion devices 108 and 208.

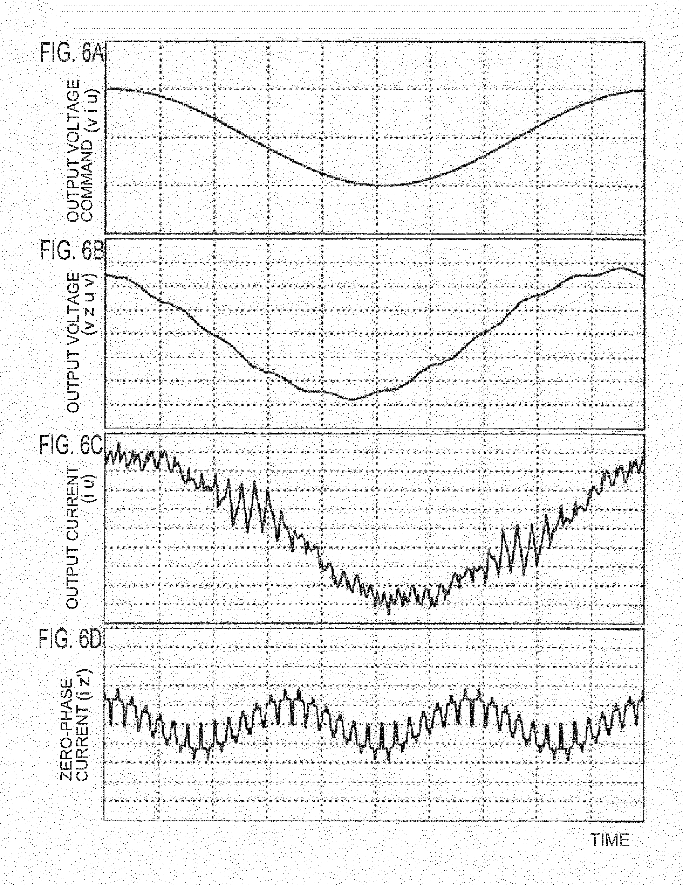

Figs. 6A - 6D are graphs showing operating waveforms in this embodiment.

A power supply that is stable enough to be regarded as an ideal voltage supply is used as the DC voltage supply (whose intermediate point is grounded) of each of the first and second power conversion devices. Specifically, the power supply can be considered to be a stable power supply if an LC resonance frequency (L: inductance of the AC reactor in Fig. 1, C: capacitance of the voltage-dividing capacitors 504 and 505 in Fig. 3) is lower than the frequency of the disturbance signal.

Figs. 6A - 6D illustrate one fundamental wave cycle of voltage/current waveforms seen from the first power conversion device (voltages/currents in the output direction are represented as positive values) when the fundamental wave phase and the carrier wave phase of the first power conversion device are ahead of those of the second power conversion device. A triangular wave at the frequency three times the fundamental wave frequency is applied as the disturbance signal, resulting in the flow of the zero-phase current in a waveform made by superimposing harmonics around the carrier frequency on the triangular wave (disturbance signal).

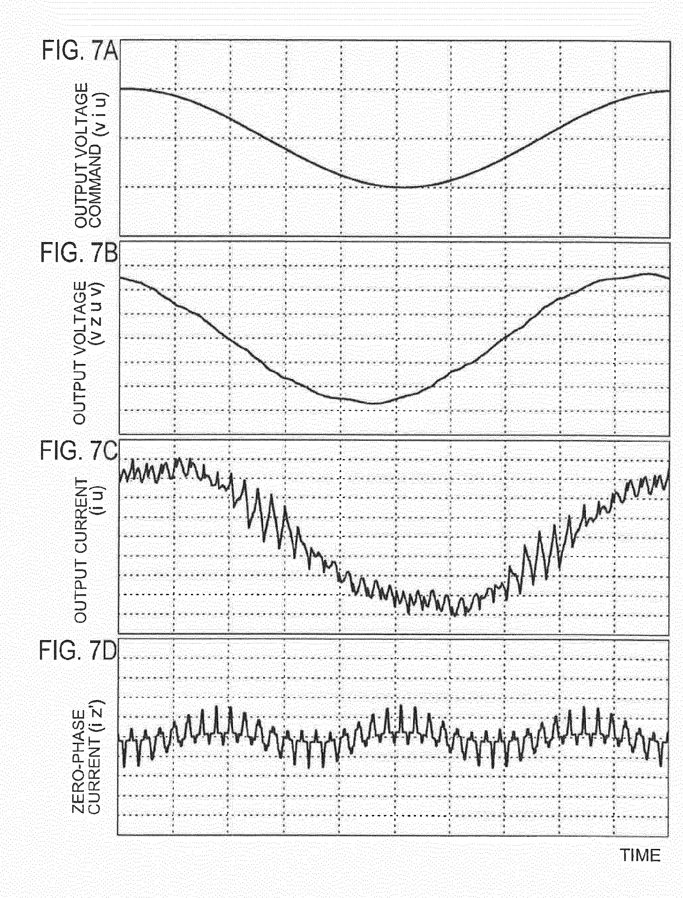

Figs. 7A - 7D show a case where the LC resonance frequency is higher than the frequency of the disturbance signal. The other conditions are equivalent to those in Figs. 6A - 6D. Comparing Figs. 6 and 7, it can be seen that the phase of the disturbance signal is inverted in the zero-phase current iz whereas the waveforms of the output voltage vzuv and the output current iu do not substantially differ between Figs. 6 and 7. This is because the voltages of the voltage-dividing capacitors 504 and 505 are changed by the inflow of the zero-phase current in the case where the capacitances of the voltage-dividing capacitors 504 and 505 are low.

From the above results, the LC resonance frequency should be lower than the frequency of the disturbance signal in order to implement the phase synchronization by use of the zero-phase current. This condition can be satisfied by setting the capacitance(s) of the voltage-dividing capacitors 504 and 505 high or by setting the frequency of the disturbance signal higher than the LC resonance frequency.

**Claims**

1.  A power conversion system comprising:

    a first DC/AC power conversion device (108);
    a second DC/AC power conversion device (208) which is connected in parallel with the first power conversion device at the AC-side; and
    an electricity receiving part (300) which receives electric power from at least one of the first and second power conversion devices, wherein:

    the first power conversion device includes:

    a first DC voltage supply (100) whose intermediate point is grounded;
    a first power converter (102) for converting
    DC power outputted by the first DC voltage supply into AC power; and
    a first controller (107) which is configured to control the first power converter based on first output voltage outputted by the first DC voltage supply and first output current outputted by the first power converter,

    the second power conversion device includes:

    a second DC voltage (200) supply independent and separate of the first DC voltage supply (100), whose intermediate point is grounded;
    a second power converter (202) for converting
    DC power outputted by the second DC voltage supply into AC power; and
    a second controller (207) which is configured to control the second power converter based on second output voltage outputted by the second DC voltage supply and second output current outputted by the second power converter,

    the first controller includes:

    zero-phase current detecting means (400) configured to detect zero-phase current from the first output current;
    disturbance signal generating means (407) configured to generate a disturbance signal based on a phase angle ($\theta$) of a fundamental wave;
    first multiplication means (401) configured to calculate a first product as the product of the zero-phase current and the disturbance signal;

subtraction means (402) configured to calculate the difference between the first product and 0;
proportional-integral control means (403) configured to output a fundamental wave frequency by performing proportional-integral control based on the difference; and
second multiplication means (408) configured to calculate a second product (Δvi) as the product of the disturbance signal and the amplitude of the disturbance signal, and

the first controller further configured to output a gate pulse signal to the first power converter based on the sum of the second product and the fundamental wave (viu, viv, viw),
wherein the first DC voltage supply includes:

a capacitor set formed by serial connection of a first capacitor (504) and a second capacitor (505); and
a DC power supply (501) connected in parallel with the capacitor set,

wherein an intermediate point between the first capacitor and the second capacitor is grounded,
wherein the first power conversion device includes a reactor (104) adapted to smooth the AC current outputted by the first power converter, and
wherein the capacitances of the first capacitor and the second capacitor are equal to each other, and
wherein the frequency of the disturbance signal is higher than a resonance frequency calculated from the capacitances and the inductance of the reactor.

2.  The power conversion system according to claim 1, wherein the first power conversion device includes:

voltage detecting means (106) adapted to detect line-to-line voltages of the first power converter; and
startup judgment means (431) adapted to judge whether the second power conversion device has already been started up or not based on the line-to-line voltages detected by the voltage detecting means.

3.  The power conversion system according to claim 1 or 2, wherein the first power conversion device includes voltage detecting means for detecting line-to-line voltages of the first power converter, and wherein the first power conversion device is arranged to fix the frequency of the gate pulse signal when the line-to-line voltages are a prescribed value or less.

4.  The power conversion system according to any of claims 1 - 3 wherein the zero-phase current detecting means includes:

a lowpass filter (600) configured to remove a switching frequency component of the zero-phase current from the first output current;
sampling means (601) configured to samples output values of the lowpass filter at a sampling frequency equal to a multiple of the switching frequency; and
a smoothing filter (602, 603, 604) configured to remove harmonic components from output values of the sampling means.

**Patentansprüche**

1.  Leistungswandlungssystem, Folgendes umfassend:

eine erste GS/WS-Leistungswandlungsvorrichtung (108);
eine zweite GS/WS-Leistungswandlungsvorrichtung (208), die mit der ersten Leistungswandlungsvorrichtung auf der WS-Seite parallelgeschaltet ist; und
einen Elektrizitätsempfangsteil (300), der elektrische Leistung von zumindest einer der ersten und der zweiten Leistungswandlungsvorrichtung empfängt, wobei
die erste Leistungswandlungsvorrichtung Folgendes umfasst:

eine erste GS-Spannungsversorgung (100), deren Mittelpunkt an Masse gelegt ist;
einen ersten Leistungswandler (102) zum Umwandeln von durch die erste GS-Spannungsversorgung ausgegebener GS-Leistung in WS-Leistung; und
eine erste Steuerung (107), die ausgelegt ist, um den ersten Leistungswandler basierend auf einer ersten durch die erste GS-Spannungsversorgung ausgegebenen Ausgangsspannung und einem ersten durch den ersten Leistungswandler ausgegebenen Ausgangsstrom zu steuern;

wobei die zweite Leistungswandlungsvorrichtung Folgendes umfasst:

eine zweite GS-Spannungsversorgung (200), die von der ersten GS-Spannungsversorgung (100) unabhängig und getrennt ist, deren Mittelpunkt an Masse gelegt ist;
einen zweiten Leistungswandler (202) zum Umwandeln von durch die zweite GS-Spannungsversorgung ausgegebener GS-Leistung in WS-Leistung; und
eine zweite Steuerung (207), die ausgelegt ist, um den zweiten Leistungswandler basierend auf einer zweiten durch die zweite GS-Spannungsversorgung ausgegebenen Ausgangsspannung und einem zweiten durch den zweiten Leistungswandler ausgegebenen Ausgangsstrom zu steuern;

wobei die erste Steuerung Folgendes umfasst:

ein Nullphasenstromdetektionsmittel (400), das ausgelegt ist, um Nullphasenstrom anhand des ersten Ausgangsstroms zu detektieren;
ein Störungssignalerzeugungsmittel (407), das ausgelegt ist, um ein Störungssignal basierend auf einem Phasenwinkel ($\theta$) einer Grundwelle zu erzeugen;
ein erstes Multiplikationsmittel (401), das ausgelegt ist, um ein erstes Produkt als Produkt des Nullphasenstroms und des Störungssignals zu berechnen;
ein Subtraktionsmittel (402), das ausgelegt ist, um die Differenz zwischen dem ersten Produkt und 0 zu berechnen;
ein Proportional-Integral-Steuermittel (403), das ausgelegt ist, um durch Durchführen eines Proportional-Integral-Steuervorgangs basierend auf der Differenz eine Grundwellenfrequenz auszugeben; und
ein zweites Multiplikationsmittel (408), das ausgelegt ist, um ein zweites Produkt ($\Delta$vi) als Produkt des Störungssignals und der Amplitude des Störungssignals zu berechnen, und wobei

die erste Steuerung ferner ausgelegt ist, um basierend auf der Summe des zweiten Produkts und der Grundwelle (viu, viv, viw) ein Gate-Impulssignal für den ersten Leistungswandler auszugeben,
wobei die erste GS-Spannungsversorgung Folgendes umfasst:

einen Kondensatorsatz, der durch serielles Verbinden eines ersten Kondensators (504) und eines zweiten Kondensators (505) ausgebildet ist; und
eine GS-Leistungsversorgung (501), die mit dem Kondensatorsatz parallelgeschaltet ist,

wobei ein Mittelpunkt zwischen dem ersten Kondensator und dem zweiten Kondensator an Masse gelegt ist,
wobei die erste Leistungswandlungsvorrichtung einen Induktor (104) umfasst, der geeignet ist, den durch den ersten Leistungswandler ausgegebenen WS-Strom zu glätten, und
wobei die Kapazitäten des ersten Kondensators und des zweiten Kondensators gleich sind und wobei die Frequenz des Störungssignals höher als eine Resonanzfrequenz ist, die anhand der Kapazitäten und Induktivität des Induktors berechnet wird.

2. Leistungswandlungssystem nach Anspruch 1, wobei die erste Leistungswandlungsvorrichtung Folgendes umfasst:

ein Spannungsdetektionsmittel (106), das geeignet ist, Leitung-zu-Leitungs-Spannungen des ersten Leistungswandlers zu detektieren; und
ein Inbetriebnahme-Beurteilungsmittel (431), das geeignet ist, basierend auf den durch das Spannungsdetektionsmittel detektierten Leitung-zu-Leitungs-Spannungen zu beurteilen, ob die zweite Leistungswandlungsvorrichtung bereits in Betrieb genommen wurde.

3. Leistungswandlungssystem nach Anspruch 1 oder 2, wobei die erste Leistungswandlungsvorrichtung Spannungsdetektionsmittel zum Detektieren von Leitung-zu-Leitungs-Spannungen des ersten Leistungswandlers umfasst und wobei die erste Leistungswandlungsvorrichtung angeordnet ist, um die Frequenz des Gate-Impulssignals zu festzulegen, wenn die Leitung-zu-Leitungs-Spannungen ein vorgegebener Wert oder kleiner sind.

4. Leitungswandlungssystem nach einem der Ansprüche 1 bis 3, wobei das Nullphasenstromdetektionsmittel Folgendes umfasst:

ein Tiefpassfilter (600), das ausgelegt ist, um eine Schaltfrequenzkomponente des Nullphasenstroms aus dem ersten Ausgangsstrom zu entfernen;

ein Abtastmittel (601), das ausgelegt ist, um Ausgangswerte des Tiefpassfilters bei einer Abtastfrequenz, die gleich einem Vielfachen der Schaltfrequenz ist, abzutasten; und

ein Glättungsfilter (602, 603, 604), das ausgelegt ist, um harmonische Komponenten aus Ausgangswerten des Abtastmittels zu entfernen.

**Revendications**

1. Système de conversion d'alimentation comprenant :

un premier dispositif de conversion d'alimentation courant continu/courant alternatif, CC/CA (108) ;

un second dispositif de conversion d'alimentation CC/CA (208) qui est connecté en parallèle au premier dispositif de conversion d'alimentation du côté CA ; et

une partie de réception d'électricité (300) qui reçoit une alimentation électrique d'au moins un des premier et second dispositifs de conversion d'alimentation, dans lequel :

le premier dispositif de conversion d'alimentation comprend :

une première source de tension CC (100) dont un point intermédiaire est mis à la terre ;

un premier convertisseur d'alimentation (102) pour convertir l'alimentation CC délivrée en sortie par la première source de tension CC en une alimentation CA ; et

un premier dispositif de commande (107) qui est configuré pour commander le premier convertisseur d'alimentation sur la base d'une première tension de sortie délivrée en sortie par la première source de tension CC et d'un premier courant de sortie délivré en sortie par le premier convertisseur d'alimentation,

le second dispositif de conversion d'alimentation comprend :

une seconde source de tension CC (200) indépendante et séparée de la première source de tension (100), dont un point intermédiaire est mis à la terre ;

un second convertisseur d'alimentation (202) pour convertir une alimentation CC délivrée en sortie par la seconde source de tension CC en alimentation CA ; et

un second dispositif de commande (207) qui est configuré pour commander le second convertisseur d'alimentation sur la base de la seconde tension de sortie délivrée en sortie par la seconde source de tension CC et du second courant de sortie délivré en sortie par le second convertisseur d'alimentation,

le premier dispositif comprend :

des moyens de détection de courant à phase zéro (400) configurés pour détecter un courant à phase zéro à partir du premier courant de sortie ;

des moyens de génération de signal de perturbation (407) configurés pour générer un signal de perturbation sur la base d'un angle de phase ($\theta$) d'une onde fondamentale ;

des premiers moyens de multiplication (401) configurés pour calculer un premier produit en tant que produit du courant à phase zéro et du signal de perturbation ;

des moyens de soustraction (402) configurés pour calculer la différence entre le premier produit et 0 ;

des moyens de commande proportionnelle-intégrale (403) configurés pour délivrer en sortie une fréquence d'onde fondamentale en effectuant une commande proportionnelle-intégrale sur la base de la différence ; et

des seconds moyens de multiplication (408) configurés pour calculer un second produit ($\Delta vi$) en tant que produit du signal de perturbation et de l'amplitude du signal de perturbation, et

le premier dispositif de commande étant en outre configuré pour délivrer en sortie un signal d'impulsion de grille au premier convertisseur d'alimentation sur la base de la somme du second produit et de l'onde fondamentale (viu, viv, viw),

dans lequel la première source de tension CC comprend :

un ensemble de condensateurs formé par une connexion en série d'un premier condensateur (504) et d'un second condensateur (505) ; et

une source d'alimentation CC (501) connectée en parallèle avec l'ensemble de condensateurs,

dans lequel un point intermédiaire entre le premier condensateur et le second condensateur est mis à la terre, dans lequel le premier dispositif de conversion d'alimentation comprend un réacteur (104) adapté pour lisser le CA délivré en sortie par le premier convertisseur d'alimentation, et

dans lequel les capacités du premier condensateur et du second condensateur sont égales l'une à l'autre, et dans lequel la fréquence du signal de perturbation est supérieure à une fréquence de résonance calculée à partir des capacités et de l'inductance du réacteur.

2. Système de conversion d'alimentation selon la revendication 1, dans lequel le premier dispositif de conversion d'alimentation comprend :

des moyens de détection de tension adaptés pour détecter des tensions de ligne à ligne (106) du premier convertisseur d'alimentation ; et

des moyens de jugement de démarrage (431) adapté pour juger si le second dispositif de conversion d'alimentation a déjà été démarré ou non sur la base des tensions de ligne à ligne détectées par les moyens de détection de tension.

3. Système de conversion d'alimentation selon la revendication 1 ou 2, dans lequel le premier dispositif de conversion d'alimentation comprend des moyens de détection de tension pour détecter des tensions de ligne à ligne du premier convertisseur d'alimentation, et dans lequel le premier dispositif de conversion d'alimentation est agencé pour fixer la fréquence du signal d'impulsion de grille lorsque les tensions de ligne à ligne sont une valeur prescrite ou moins.

4. Système de conversion d'alimentation selon l'une quelconque des revendications 1 à 3, dans lequel les moyens de détection de courant à phase zéro comprennent :

un filtre passe-bas (600) configuré pour supprimer une composante de fréquence de commutation du courant à phase zéro à partir du premier courant de sortie ;

des moyens d'échantillonnage (601) configurés pour échantillonner des valeurs de sortie du filtre passe-bas à une fréquence d'échantillonnage égale à un multiple de la fréquence de commutation ; et

un filtre de lissage (602, 603, 604) configuré pour supprimer des composantes harmoniques à partir de valeurs de sortie des moyens d'échantillonnage.

FIG. 1

EP 2 706 650 B1

FIG. 2

FIG. 3

FIG. 4

FIG. 5 A    ZERO-PHASE CURRENT
(SENSOR OUTPUT)

iz1

TIME

FIG. 5 B    ZERO-PHASE CURRENT
(LPF OUTPUT)

izf

TIME

FIG. 5 C    ZERO-PHASE CURRENT
(A/D CONVERSION OUTPUT)

iza

TIME

FIG. 5 D    ZERO-PHASE CURRENT
(MOVING AVERAGE OUTPUT)

iz

TIME

FIG. 6A — OUTPUT VOLTAGE COMMAND (v i u)

FIG. 6B — OUTPUT VOLTAGE (v z u v)

FIG. 6C — OUTPUT CURRENT (i u)

FIG. 6D — ZERO-PHASE CURRENT (i z')

TIME

FIG. 7A

OUTPUT VOLTAGE COMMAND (v i u)

FIG. 7B

OUTPUT VOLTAGE (vz u v)

FIG. 7C

OUTPUT CURRENT (i u)

FIG. 7D

ZERO-PHASE CURRENT (i z')

TIME

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006121839 A
- JP 5260793 A
- JP 6153519 A
- JP 2007244080 A
- JP 2009254122 A

**Non-patent literature cited in the description**

- **DE D et al.** Decentralized Parallel Operation of Inverters Sharing Unbalanced and Nonlinear Loads. *IEEE TRANSACTIONS ON POWER ELECTRONICS, INSTITUTE OF ELECTRICAL AND ELECTRONICS ENGINEERS, USA,* 01 December 2010, vol. 25 (12), 3015-3025